# EUROPEAN PATENT SPECIFICATION

(11) **EP 3 613 171 B1**
(45) Date of publication and mention of the grant of the patent: **30.06.2021**
(21) Application number: 17745894.0
(22) Date of filing: 30.05.2017
(51) Int. Cl.: H04L 9/32, H04L 29/06

(54) **INDUSTRIAL NETWORK USING A BLOCKCHAIN FOR ACCESS CONTROL, AND ACCESS CONTROL METHOD**
INDUSTRIELLES NETZWERK MIT EINER BLOCKCHAIN ZUR ZUGANGSKONTROLLE UND ZUGANGSKONTROLLVERFAHREN
RÉSEAU INDUSTRIEL UTILISANT UNE CHAÎNE DE BLOCS POUR LE CONTRÔLE D'ACCÈS, ET PROCÉDÉ DE CONTRÔLE D'ACCÈS

(43) Date of publication of application: 26.02.2020
(73) Proprietor: Siemens Aktiengesellschaft, 80333 München (DE)
(72) Inventor: OZHIGIN, Artem Vladimirovich, St. Petersburg 198264 (RU); SOBOLEV, Sergey Pavlovich, St. Petersburg 198332 (RU)
(74) Representative: Isarpatent
(86) International application number: PCT/RU2017/000371
(87) International publication number: WO 2018/222066

(56) References cited:
- WO-A1-2016/128491
- WO-A1-2017/021153
- US-A1- 2016 112 406
- Andreas M. Antonopoulos: "Mastering Bitcoin - Unlocking Digital Cryptocurrencies" In: "Mastering bitcoin : [unlocking digital cryptocurrencies]", 20 December 2014 (2014-12-20), O'Reilly Media, Beijing Cambridge Farnham Köln Sebastopol Tokyo, XP055306939, ISBN: 978-1-4493-7404-4 pages 15-29
- "Chapter 13: Key Management Techniques ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 543 - 590 , 1 October 1996 (1996-10-01), XP001525013, ISBN: 978-0-8493-8523-0 Retrieved from the Internet: URL:http://www.cacr.math.uwaterloo.ca/hac/

## Description

The present invention relates to an industrial network comprising a plurality of network nodes and an access control method for the same. The field of the present invention is industrial field automation.

Industrial networks for field automation typically use industry standard connections like Ethernet to interconnect a plurality of control units. The industrial network may cover a large area where physical access control is impossible to achieve. It may therefore be easy for an intruder to go to a remote location and join a portable computer to the industrial network. It is desirable to perform computational access control to prevent an intruder from gaining access to the industrial network, but allow a legitimate maintenance device to join the industrial network at the remote location. This can conventionally be achieved using a virtual private network (VPN). However, once an intruder manages to enter the VPN, the intruder will have full access to the network. Once this happens, it is difficult to know which control units were compromised by the intruder. Further, a centralized authentication database can be used to implement credential based access. However, in this case, if connectivity with the centralized authentication database is temporarily lost due to a network error, it may be impossible to connect a legitimate maintenance device at the remote location for diagnosis.

WO 2016/128491 A1 relates to validating computer access usage.

WO 2017/021153 A1 relates to expendable access control.

It is an object of the present invention to provide secure and resilient access control for an industrial network.

According to a first aspect, an industrial network comprises a plurality of network nodes. The plurality of network nodes are interconnected and are configured to host a blockchain. The blockchain is a distributed permissionless trusted database configured to store a plurality of confirmed transactions. The plurality of network nodes are further configured to exchange an unconfirmed transaction among each other, and to add the unconfirmed transaction to the blockchain as a confirmed transaction of the plurality of confirmed transactions only on the condition that a consensus determined by a consensus protocol of the blockchain is reached between the plurality of network nodes. The plurality of network nodes further include a plurality of trusted network nodes forming a trusted backbone of the industrial network. The confirmed transactions stored by the blockchain comprise a confirmed connection transaction that is authorized by the trusted backbone, is indicative of a connecting device and is descriptive of a right of the connecting device to access the industrial network.

A "network node", as used herein, may refer to any unit that is configured to participate in the hosting of the blockchain. A network node may be embodied in software and/or hardware. In particular, a network node may be implemented using, for example, a control unit of the industrial network, an embedded device, a personal computer device, a server computer device, or an application specific integrated circuit device. Each respective unit or device may implement one or more network nodes.

The plurality of network nodes may be interconnected using any suitable connection technology like, for example, Ethernet, Fieldbus, EtherCAT, Wi-Fi, Bluetooth, and in any suitable topology, including a star topology, a line topology, a mesh topology or a random topology.

A "transaction", as used herein, may refer to any sequence of data. In other words, the semantics of a transaction depends on how the transaction is interpreted by a network node when referring to the contents of the transaction. In particular, hereinbelow, different possible semantics of transactions stored in the blockchain will be described.

A transaction is referred to as a "confirmed transaction" if it is stored by the blockchain, and is referred to as an "unconfirmed transaction", if it is not, or not yet, stored by the blockchain.

The plurality of network nodes may exchange the unconfirmed transaction among each other in a peer-to-peer manner, wherein each of the plurality network nodes is aware of how to reach at least one further network node, but may not be aware of how to reach all of the plurality of network nodes. The unconfirmed transaction may be passed on from network node to network node until it ultimately disseminates over the entire network.

The blockchain is a distributed permissionless trusted database. The blockchain may store the plurality of confirmed transactions as a linked chain of blocks, each block comprising at least one of the plurality of confirmed transactions. The blockchain may be distributed over the plurality of network nodes, i.e., for example, the plurality of network hosts may host the blockchain by each of the plurality of network hosts storing, in a storage included in each of the network hosts, a copy of the linked chain of blocks. The blockchain may be permissionless in a sense that no credentials, like username and password, are required to read a transaction from the blockchain or to add a transaction to the blockchain.

The consensus protocol of the blockchain may be configured such that adding an unconfirmed transaction exchanged between the plurality of network nodes to the plurality of confirmed transactions stored in the blockchain requires an amount of computing resources to be allocated, used or spent, thereby making it difficult for intruders to introduce malicious transactions into the blockchain. Computing resources, as used herein, may be, for example, computing power, storage space, cryptocurrency amounts or similar.

The consensus protocol may, in particular, be configured such that an intruder using a malicious network node and trying to add a malicious unconfirmed transaction into the blockchain, and/or to manipulate an existing confirmed transaction stored by the blockchain, would have to allocate, use or spend a similar or higher amount of computing resources as the combined computing resources of all legitimate network nodes participating in reaching the consensus, in order for the plurality of network nodes to reach the consensus to add the malicious unconfirmed transaction as a confirmed transaction to the blockchain. The consensus protocol may thus be regarded as the source of trust in the contents of the transactions stored by the distributed database constituted by the blockchain in spite of the absence of trust in at least some of the network nodes.

In other words, even if the industrial network comprises, among the plurality of network nodes, at least one malicious network node that has been joined to the network by an intruder, the blockchain may still be able to serve as a trusted database.

The confirmed transactions stored by the blockchain comprise a confirmed connection transaction. The term "connection transaction", herein, is used to describe a transaction with a specific semantics, i.e. a transaction comprising data that is indicative of a connecting device and descriptive of a right of the connecting device to access the industrial network.

A connecting device, herein, may refer to any device that is seeking to join and access the industrial network. For example, the connecting device may be a device seeking to access a resource provided by the industrial network. For example, the connecting device may be a portable computer operated by a maintenance operator. The maintenance operator may join the portable user to the industrial network at a remote location and use it to try to gain access to a remote control unit of the industrial network.

By storing, in the blockchain, data indicative of a connecting device and descriptive of a right of the connecting device to access the industrial network, any network node is able to refer to the blockchain in order to determine whether a connecting device seeking to access a resource provided by the network node has been granted the right to do so. I.e., for example, the remote control unit of the industrial network may comprise a network node that is configured to refer to the blockchain to determine whether the portable computer is a legitimate maintenance device.

In this way, the industrial network according to the first aspect is able to implement computational access control based on the contents of the confirmed connection transactions stored in the blockchain. As noted above, the blockchain is a database that is trusted in spite of the absence of trust in any particular network node of the industrial network. I.e., the connection transactions stored in the blockchain are trusted and safeguarded from manipulation even if one or more malicious network nodes are connected to the industrial network. The security of the computational access control to the resources provided by the industrial network is thus improved.

The industrial network according to the first aspect further comprises a trusted backbone comprised by a plurality of trusted network nodes. A trusted network node may be a network node that is located in one or more areas, such as one or more safe rooms, that can be secured with physical access controls, and/or a node that is only accessible to trusted operators of the industrial network.

The trusted backbone may be used to decide which connecting devices are granted access to the industrial network. In other words, the trusted backbone may be configured to create a connection transaction. I.e., decisions taken by the trusted backbone may be represented in the blockchain by the confirmed connection transaction stored in the blockchain. The confirmed connection transaction stored in the blockchain is authorized by the trusted backbone. I.e., the confirmed connection transaction may comprise authorization data created by the trusted backbone as a proof that the confirmed connection transaction is legitimate.

The trusted backbone may be advantageously used by the owner or operator of the industrial network to retain control over which connecting devices are granted the right to access the industrial network, while at the same leveraging the benefits of the blockchain as a distributed permissionless trusted database.

According to an embodiment, the blockchain may store the plurality of confirmed transactions as a chain of blocks, wherein each block of the chain of blocks comprises one or more of the confirmed transactions, a hash value of the confirmed transactions comprised by the block and a reference value referring back to a previous block of the chain of blocks, thereby forming the chain of blocks.

The reference value referring back to the previous block of the chain of blocks may be a hash value of the entire data comprised by the previous block of the chain of block.

The hash value of the confirmed transactions comprised by the block may be a hash value or Merkle root of a Merkle tree of hash values of each confirmed transaction comprised by the block. In some embodiments, the hash value of the confirmed transactions comprised by the block may be a hash value of a list of the hash values of each confirmed transaction of the block, or a hash value of a concatenation of each confirmed transaction of the block.

For example, each hash value may be a value calculated by applying a hash function to a sequence data. The hash function may be selected such that it is computationally easy to calculate the hash value for a given set of sequence data, but it is computationally difficult to calculate a sequence of data for a given hash value. The hash function may be selected from one of the following: SHA-1, SHA-2, SHA-3, SHA256, SHA256d and a Keecak function.

The plurality of network nodes may be configured to add the unconfirmed transaction to the blockchain by appending a candidate block comprising multiple unconfirmed transactions including the unconfirmed transaction to the chain of blocks, whereby the candidate block becomes a block of the chain of blocks and the unconfirmed transactions comprised by the candidate block become confirmed transactions of the plurality of confirmed transactions.

The consensus to add unconfirmed transactions to the blockchain as the confirmed transaction may be a consensus to append the candidate block comprising the multiple unconfirmed transactions including the unconfirmed transaction to the chain of blocks.

The consensus to append the candidate block to the chain of blocks according to the consensus protocol of the blockchain may be achieved in the following way: Each of the plurality of network nodes may locally store one or more local chains of blocks, wherein one of the local chains of blocks is regarded by the respective network node as a true representation of the chain of blocks of the blockchain. At least some of the plurality of network nodes may be mining network nodes configured to form the candidate block from the multiple unconfirmed transactions. The plurality of network nodes may be configured to exchange the candidate block among each other. Each of the plurality of network nodes may be configured to add the exchanged candidate block to a respective local chain of blocks of the one or more local chains of blocks only if the exchanged candidate block comprises a proof of work being a proof of resources allocated, used or spent by the mining network node having formed the exchanged candidate block in forming the exchanged candidate block; and only if the reference value of the exchanged candidate block refers back to either the last block of the respective local chain of blocks, in which case the exchanged candidate block is appended to the respective local chain of blocks to become a new last block of the respective local chain of blocks; or to any other block of the respective local chain of blocks that is not the last block of the respective local chain of blocks, in which case the respective local chain of blocks is forked, thereby creating a further local chain of blocks, and the exchanged candidate block is appended to the further local chain of blocks to become a new last block of the further local chain of blocks. For each of the plurality of network nodes, if a plurality of local chains of blocks exist, the longest local chain of blocks of the plurality of local chains of blocks may be regarded as the true representation of the chain of blocks of the blockchain, and any other local chain of blocks of the plurality of local chains of blocks may be discarded.

In some variants, the proof of work may be an arbitrary nonce value comprised by the candidate block and selected such that the hash value of the candidate block is smaller than a predetermined threshold.

It will be appreciated that due to the nature of the hash function, it is computationally difficult and will require computing resources such as processing power and time to select a proper nonce value.

In some variants, the exchanged candidate block may not be required to comprise a proof of work, and the amount of resources allocated, used or spent by the mining network node having formed the exchanged candidate block in forming the exchanged candidate block may be determined instead using a proof-of-stake, proof-of-burn, proof-of-activity or proof-of-raffle method.

By regarding only the longest chain of blocks as the true representation of the blockchain, wherein each block comprises a proof-of-work or other proof of computing resources allocated, used or spent, it is made prohibitively difficult, in terms of computing power and/or other computing resources that have to be allocated, used or spent, for a malicious intruder to manipulate data stored in the confirmed transactions in the blockchain and/or to add new malicious transactions to the blockchain.

Further, since a respective network node stores a local chain of blocks, the blockchain is resilient even if a temporary loss of network connectivity occurs. When a connecting device connects to a remote network node in the industrial network, the remote network node may refer to the longest local chain of blocks in order to determine whether it comprises a confirmed connection transaction that is descriptive of the right of the connecting device to access the industrial network, even if some or all of the network connectivity has been temporarily lost.

According to a further embodiment, the unconfirmed transaction is an unconfirmed connection transaction, the trusted backbone is configured to authorize the unconfirmed connection transaction, and the plurality of network nodes are further configured to reach the consensus to add the unconfirmed connection transaction to the blockchain as the confirmed connection transaction of the plurality of confirmed transactions only on the condition that the unconfirmed connection transaction is authorized by the trusted backbone.

The consensus protocol may require any unconfirmed transaction to fulfil a certain validity criterion for it to be added to the blockchain as a confirmed transaction of the plurality of confirmed transactions. The validity criterion may depend on the semantics of the respective transaction. If the unconfirmed transaction is an unconfirmed connection transaction, the validity criterion for adding an unconfirmed connection transaction may, according to the present embodiment, be that the unconfirmed connection transaction shall be authorized by the trusted backbone. I.e., the unconfirmed connection transaction may be required to comprise authorization information created by a trusted network node of the trusted backbone.

In this way, even if a malicious network node exchanges a malicious unconfirmed connection transaction with the plurality of network nodes, the malicious unconfirmed connection transaction not being authorized by the trusted backbone, at least the non-malicious network nodes of the plurality of network nodes will adhere to the consensus protocol and not add the malicious unconfirmed connection transaction to the blockchain. The security of the computational access control implemented by the industrial network is thereby further improved.

The trusted backbone may be configured to authorize the unconfirmed connection transaction only if the unconfirmed connection transaction has been initiated by a node of the trusted backbone. For example, any of the trusted network nodes may only authorize an unconfirmed connection transaction that has been initiated by the respective node. In this way, it is ensured that only the trusted network node is able to create a valid unconfirmed connection transaction. In other words, only trusted operators of the trusted network node will be able to have an unconfirmed connection transactions descriptive of the right to access the industrial network be added to the blockchain as the confirmed connection transaction.

According to a further embodiment, the plurality of network nodes further comprise a provider network node configured to provide a network resource. The provider network node is further configured to, if the connecting device requests access to the network resource provided by the provider network node, grant the connecting device access to the network resource provided by the provider network node only on the condition that the blockchain stores a first predetermined number of confirmed connection transactions that are authorized by the trusted backbone, indicative of the connecting device and descriptive of the right of the connecting device to access the network resource provided by the provider network node. The first predetermined number is one or greater.

The provider network node may be, for example, a network node embodied by a control unit in the industrial network. The network resource provided by the provider network node may be a service that allows the connecting device to perform control operations with and/or read status data from the control unit. The provider network node may also be, for example, a network node embodied by a server computer of the industrial network, and the network resource may also be a web site, a shared directory, a downloadable file or any other network resource that is designed to be made available only to certain authorized connecting devices.

The predetermined number may be one if the trusted backbone is configured such that one or more of trusted network nodes of the trusted backbone all authorize the same connection transaction indicative of the connecting device, or may be greater than one if the trusted backbone is configured such that one or more of the trusted network nodes each authorize a separate connection transaction indicative of the connecting device.

The right to access the network resource provided by the provider network node is an example of the right to access the industrial network. A respective connection transaction may be indicative of the right to access the network resource provided by the provider network node by comprising access right data. The access right data may specify an identifier of the network resource provided by the provider network node and may further specify an access right, like the right to read and/or to write from the network resource. In one variant, the access right data may be an Access Control List (ACL).

According to a further embodiment, a respective connection transaction is indicative of the connecting device by comprising identification information of the connecting device.

"A respective connection transaction", as used herein, is used to refer to either an unconfirmed connection transaction, or a confirmed connection transaction of the first predetermined number of confirmed connection transactions, or both.

At least the provider network node of the plurality of network nodes is configured to determine the identity of the connecting device by verifying identity information transmitted by the connecting device based on the identification information comprised by the respective connection transaction, wherein the respective connection transaction may be a confirmed connection transaction of the first predetermined number of confirmed connection transactions.

The identity information may be data that is suitable to unambiguously identify the connecting device. It may, for example be a hardware address that is difficult to counterfeit, or cryptographic information transmitted by the connecting device. In order to verify the identity information, the provider network node may compare the identity information with identification information comprised by the connection transactions stored by the blockchain, or perform a verification algorithm on the identity information and the identification information in order to determine the identity of the connecting device.

The provider network node may determine the identity of the connecting device in the manner described above when the connecting device requests access to the network resource provided by the provider network node, and only grant access if the identity of the connecting device is successfully determined.

According to a further embodiment, the industrial network further comprises a trusted certification authority. The identification information of the connecting device comprised by the connection transaction indicative of the connecting device comprises a digital certificate comprising a public key of the connecting device and being signed by the trusted certification authority, and the identity information transmitted by the connecting device may comprise a digital signature.

A trusted certification authority or CA is a unit that is configured to sign digital certificates, wherein the digital certificates signed by the CA are trusted by the plurality of network nodes. A respective digital certificate may include an identifier, a public key, and a signature by the CA.

In the present embodiment, the provider network node may determine the identity of the connecting device in the following way: The provider verifies the digital signature comprised by the identity information transmitted by the connecting device using the public key of the connecting device comprised by the digital certificate included in the connection transaction indicative of the connecting device. This verification will only give an affirmative result if the digital signature has been created by the connecting device using a private key secretly stored in and known only to the connecting device, wherein the private key is the same private key that has previously been used in generating the digital certificate.

In this way, the identity of the connecting device is determined in a cryptographic manner, thus further enhancing the security of computational access control in the industrial network.

According to a further embodiment, the trusted backbone is configured to authorize the unconfirmed transaction by each of a second predetermined number of the trusted network nodes of the trusted backbone adding a digital signature to the unconfirmed transaction. Herein, a confirmed transaction of the plurality of confirmed transactions is a confirmed transaction that is authorized by the trusted backbone if it comprises the digital signatures of at least the second predetermined number of the trusted network nodes of the trusted backbone. The second predetermined number may be one or greater.

In the present embodiment, the trusted backbone is configured to digitally sign the unconfirmed connection transaction. In this way, the plurality of network nodes can determine whether the unconfirmed connection is authorized by the trusted backbone when reaching the consensus to add the unconfirmed transaction to the backbone, by verifying the digital signature of the trusted backbone. Similarly, as an additional safeguard against counterfeiting, any of the plurality network nodes, like for example, the provider network node, can also check at a later stage if the confirmed transaction stored by the backbone is authorized by the trusted backbone.

For example, the trusted backbone may only digitally sign the unconfirmed connection transaction if the unconfirmed connection transaction has been initiated by the trusted backbone.

According to a further embodiment, the plurality of confirmed transactions stored by the blockchain further comprise one or more confirmed trusted node identification transactions, wherein a trusted node identification transaction is indicative of at least one trusted network node and descriptive of a right of the at least one trusted network node to belong to the trusted backbone. The plurality of network nodes are configured, when determining if a respective connection transaction is authorized by the trusted backbone, to determine the trusted backbone by referring to the one or more confirmed trusted node identification transactions stored in the blockchain.

According to the present embodiment, the blockchain is used to store information indicative of the trusted backbone. In this way, the information indicative of the trusted network nodes forming the trusted backbone may be stored in a secure way and safeguarded against manipulation. For example, if a trusted network node of the trusted backbone is configured to authorize a transaction by adding a digital signature to the transaction, a corresponding trusted node identification transaction may comprise a public key of the trusted network node.

The trusted node identification transaction may have a semantics similar to the semantics of the connection transaction. I.e., a trusted node identification transaction may be indicative of a trusted network node in the same way as a connection transaction is indicative of a connecting device, for example by comprising a digital certificate of the trusted network node comprising the public key of the trusted network node. The trusted node identification transaction may further be descriptive of a right of the trusted network node of being part of the trusted backbone. The right to be part of the trusted backbone is a further example of the right to access the industrial network. For example, the trusted node identification transaction may comprise an Access Control List (ACL) that includes a flag indicating that the network node indicated by the trusted node identification transaction is a trusted network node.

According to a further embodiment, the connecting device comprises a network node that, when joined to the industrial network, is configured to become one of the network nodes forming the industrial network. Further, each network node of the plurality of network nodes comprises a digital wallet. The plurality of network nodes are further configured to allow transfer of cryptocurrency among each other by exchanging among each other an unconfirmed cryptocurrency transaction and adding the unconfirmed cryptocurrency transaction to the blockchain as a confirmed cryptocurrency transaction of the plurality of confirmed transactions. Herein, the cryptocurrency transaction is a transaction specifying the transfer of an amount of cryptocurrency from the digital wallet of a remitting network node of the plurality of network nodes to the digital wallet of a beneficiary network node of the plurality of network nodes.

In other words, according to the present embodiment, the industrial network implements a cryptocurrency system on top of the blockchain hosted by the plurality of network nodes. The semantics of the cryptocurrency may be a semantics that is adapted to the requirements in an industrial network system. For example, an amount of cryptocurrency may enable the node owning the amount of cryptocurrency to access a network resource provided in the industrial network for a specific number of times corresponding to the amount of cryptocurrency. In this way, cryptocurrency may be used to implement quotas for the use of the industrial network system.

According to a further embodiment, a cryptocurrency transaction specifying the transfer of an amount of cryptocurrency from a remitting network node to a beneficiary network node may comprise an output and my further comprise an input. The output may be data comprised by the cryptocurrency transaction that specifies the amount of cryptocurrency and a public key of the beneficiary network node of the cryptocurrency transaction. The input may be data comprised by the cryptocurrency transaction that comprises a reference to a referenced funding output which is an output comprised by a previous cryptocurrency transaction that is used to fund the cryptocurrency transaction, and a digital signature created using a private key of the remitting network node of the cryptocurrency transaction.

The term "output" could be seen as a "credit note" and the term "input" could be seen as a "debit note" in classical financial terminology.

For example, an output that is referenced by an input comprised by a confirmed cryptocurrency transaction stored by the blockchain is a spent output that has already been spent. Conversely, an output comprised by a cryptocurrency transaction stored by the blockchain that is not referenced by any of the inputs comprised by the confirmed cryptocurrency transactions stored by the blockchain is an unspent output that has previously received a cryptocurrency amount by a previous confirmed cryptocurrency transaction, but has not yet been spent. In this way, the blockchain may store a collection of unspent outputs.

The plurality of network nodes may be further configured to reach the consensus to add an unconfirmed cryptocurrency transaction to the blockchain as a confirmed transaction of the plurality of confirmed transactions only on the condition that the input of the unconfirmed cryptocurrency transaction comprises a reference to an unspent referenced funding output to fund the transaction, and that the digital signature comprised by the input can be verified by using the public key stored in the unspent referenced funding output.

In this way, having access to the private key associated with the public key stored in the unspent output enables the remitting network node to successfully reference the unspent output in an input of a cryptocurrency transaction created by the remitting network node.

A digital wallet may be a digital container configured to store a plurality of private keys, wherein each private key is associated with a corresponding public key, the public key being a public key that is comprised by an unspent output stored in the blockchain. In this way, the private keys stored in the digital wallet allow the network node comprising the digital wallet to dispose of the cryptocurrency amounts specified by the corresponding unspent outputs stored in the blockchain.

It is noted that a "private key being associated with a corresponding public key" refers to the fact that the private key and the corresponding public key together constitute a public-private key pair according to an asymmetric public-private cryptographic method. A first network node having access to the private key is able to create a digital signature, and a second network node having access to the public key is able to verify the signature, i.e. to verify that the digital signature has been created by the first network node.

The process to "transfer of an amount of cryptocurrency from the digital wallet of a remitting network node to the digital wallet of a beneficiary network node of the plurality of network nodes" may involve the following steps: The beneficiary network node creates a public-private key pair comprising a public key and a private key, communicates the public key to the remitting network node, and stores the private key in the digital wallet of the beneficiary network node. The remitting network node creates an unconfirmed cryptocurrency transaction. The unconfirmed cryptocurrency transaction comprises an input which references an unspent output at the disposal of the remitting network node, i.e. an unspent output comprising a public key that is associated with a private key comprised by the digital wallet of the remitting network node, and uses the private key to add a digital signature to the input. The unconfirmed cryptocurrency transaction further comprises an output which specifies the amount of cryptocurrency and comprises the public key received from the beneficiary network node. The remitting network node then exchanges the unconfirmed cryptocurrency transaction with other network nodes of the plurality of network nodes. After one of the mining network node creates a block comprising the unconfirmed cryptocurrency transaction, and the plurality of network nodes reach the consensus to add the block comprising the unconfirmed cryptocurrency transaction to the blockchain, the unconfirmed cryptocurrency transaction becomes a confirmed cryptocurrency transaction, the output comprised by the confirmed cryptocurrency transaction becomes an unspent output at the disposal of the beneficiary network node, the digital wallet of which comprises the private key associated with the unspent output, and the output referenced by the input of the confirmed cryptocurrency transaction becomes a spent output that is no longer at the disposal of the remitting network node.

A digital wallet "containing" or "storing" an amount of cryptocurrency, and/or a network node "having" or "owning" an amount of cryptocurrency", therefore, as used herein, actually refers to the digital wallet of the network node comprising one or more private keys which allow the network node that includes the digital wallet to dispose of one or more unspent outputs stored in the blockchain, the one or more unspent outputs specifying, in sum, the amount of cryptocurrency, in the manner described above.

It is further noted that a cryptocurrency transaction may not comprise an input. The cryptocurrency transaction not comprising an input is a so-called "coinbase transaction", which is used to create the amount of cryptocurrency specified by the coinbase transaction.

In a modification, the plurality of network nodes may be further configured to reach the consensus to add the coinbase transaction to the blockchain as a confirmed transaction of the plurality of confirmed transactions only on the condition that the candidate block to be added to the blockchain that comprises the coinbase transaction comprises no further coinbase transaction, and that the coinbase transaction specifies a predetermined reward. The predetermined reward is an amount of currency that is newly created and that the miner network node having formed the candidate block transfers to itself as a reward for the resources allocated, used or spent by the mining network node in forming the candidate block.

In an alternative modification, the plurality of network nodes may be configured not to reach the consensus to add any coinbase transaction to the blockchain after the industrial network has been deployed in the field. In this way, the amount of cryptocurrency available in the industrial network is limited to a predetermined maximum amount.

The features of the present embodiment allow the secure operation of a cryptocurrency system in the industrial network, in which double spends are avoided and the current state of ownership of cryptocurrency amounts is safely represented in the blockchain without requiring a central clearing house.

According to a further embodiment, the trusted backbone is configured to, upon authorizing the unconfirmed connection transaction, transfer a first predetermined amount of cryptocurrency from the digital wallet of at least one of the trusted network nodes of the trusted backbone to the digital wallet of the network node of the connecting device indicated by the unconfirmed connection transaction. The provider network node is configured to grant the connecting device access to the network resource provided by the provider network node only on the further condition that a second predetermined amount of cryptocurrency is transferred from the digital wallet of the network node of the connecting device to the digital wallet of the provider network node. The second predetermined amount of cryptocurrency is lesser than or equal to the first predetermined amount of cryptocurrency.

According to the present embodiment, it is possible to enforce quotas for accessing the network resource provided by the provider network node. The trusted backbone may grant limited or "quoted" access to a connecting device by initiating and authorizing a connection transaction indicative of the connecting device and descriptive of its right to access the network resource. After that, the trusted backbone may transfer the first predetermined amount of cryptocurrency to the digital wallet of the connecting device, thus effectively assigning a quota or number of allowed accesses to the connecting device. Each time the connecting device seeks to access the network resource provided by the provider network node, the connecting device will only be granted access by the provider network node, if it transfers the second predetermined amount of cryptocurrency, which is smaller than the first predetermined amount of cryptocurrency, to the provider network node. Once the digital wallet of the connecting device is exhausted, the connecting device is no longer able to access the network resource. The connecting device may then be re-authorized by the trusted backbone, which comprises again transferring an amount of cryptocurrency to the digital wallet of the network node of the connecting device, in order for the connecting device to be able continue to access the network resource.

According to a further embodiment, the trusted backbone is further configured to authorize the unconfirmed cryptocurrency transaction only on the condition that the remitting network node or the beneficiary node is a trusted network node of the trusted network nodes of the trusted backbone, or that the beneficiary node is the provider network node. The plurality of network nodes are further configured to reach the consensus to add an unconfirmed cryptocurrency transaction to the blockchain as a confirmed cryptocurrency transaction of the plurality of confirmed transactions only on the condition that the unconfirmed cryptocurrency transaction is authorized by the trusted backbone.

According to the present embodiment, the circulation of cryptocurrency within the industrial network can be controlled. In particular, a connecting device can be prevented to transfer cryptocurrency to another, potentially malicious, connecting device.

According to a second aspect, an industrial control system is provided comprising an industrial network of the first aspect, an industrial facility and a plurality of control units, each of the control units comprising a network node of the plurality of network nodes. A network node of a respective control unit is a provider network node configured to provide a network resource allowing, when accessed, to perform a control operation on the industrial facility.

In this way, the features of the industrial network of the first aspect can be advantageously used to control and enforce quotas for the access to the control units of the industrial facility.

The embodiments and features according to the first aspect are also embodiments of the second aspect.

According to a further embodiment of the second aspect, the industrial facility is a shunting yard comprising a plurality of railroad switches. Each railroad switch is associated with one of the control units. The control operation comprises an operation to change a position of the railroad switch and/or an operation to read a status of the railroad switch.

A shunting yard is a facility used to sort railway cards in a specific way. According to the present embodiment, an intruder who has managed to join a personal computer to the industrial network by going to a railroad switch and connecting the personal computer to a cable running near the railroad switch can be effectively prevented from wreaking havoc unto the railway operation of the shunting yard.

According to a third aspect, an access control method for an industrial network comprising a plurality of network nodes being interconnected is proposed. The access control method comprises the steps of: hosting a blockchain on the plurality of network nodes, wherein the blockchain is a distributed permissionless trusted database configured to store a plurality of confirmed transactions; forming a trusted backbone of the industrial network from network nodes included by the plurality of network nodes; authorizing an unconfirmed connection transaction by the trusted backbone, exchanging the unconfirmed connection transaction among the plurality of network nodes; adding the unconfirmed transaction to the blockchain as a confirmed connection transaction of the plurality of confirmed transactions only on the condition that a consensus determined by a consensus protocol of the blockchain is reached between the plurality of network nodes; wherein the confirmed connection transaction is indicative of a connecting device and descriptive of a right of the connecting device to access the industrial network.

According to an embodiment of the third aspect, the access control method for an industrial network further comprises the following steps: providing a network resource by a provider network node comprised by the plurality of network nodes; and, if the connecting device requests access to the network resource provided by the provider network node, granting the connecting device access to the network resource provided by the provider network node only on the condition that the blockchain stores a first predetermined number of confirmed connection transactions that are authorized by the trusted backbone, indicative of the connecting device and descriptive of the right of the connecting device to access the network resource provided by the provider network node; wherein the first predetermined number is one or greater.

According to a further embodiment of the third aspect, the access control method for an industrial network further comprising the following: transferring a first predetermined amount of cryptocurrency from a digital wallet of at least one of the trusted network nodes of the trusted backbone to a digital wallet of a network node of the connecting device indicated by the unconfirmed connection transaction; granting the connecting device access to the network resource provided by the provider network node only on the further condition that a second predetermined amount of cryptocurrency is transferred from the digital wallet of the network node of the connecting device to the digital wallet of the provider network node, the second predetermined amount of cryptocurrency being lesser than or equal to the first predetermined amount of cryptocurrency.

The embodiments and features according to the first aspect are also embodiments of the second aspect.

According to a fourth aspect, a computer program product is suggested, wherein the computer program product comprises a program code for executing the method of the third aspect or of one of the embodiments of the third aspect when the program code is run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations-that are not explicitly mentioned herein-of features described above or below with regard to the embodiments. The person skilled in the art may also add individual or isolated aspects and features to the most basic form of the invention.

Further embodiments, features, and advantages of the present invention will become apparent from the subsequent description and dependent claims, taken in conjunction with the accompanying drawings, in which:
Fig. 1 shows a schematic diagram of an industrial network according to a first embodiment;
Fig. 2 shows a schematic diagram of an industrial control system including an industrial facility and an industrial network according to a second embodiment;
Fig. 3 shows a schematic diagram of the semantics of a connection transaction according to the second embodiment;
Fig. 4 shows a schematic diagram of an industrial control system including an industrial facility and an industrial network according to a third embodiment;
Fig. 5 illustrates an access control method for an industrial network according to an embodiment;
Fig. 6 illustrates an access control method for an industrial network according to a further embodiment; and
Fig. 7 illustrates an access control method for an industrial network according to yet a further embodiment.

In the Figures, like reference numerals designate like or functionally equivalent elements, unless otherwise indicated.

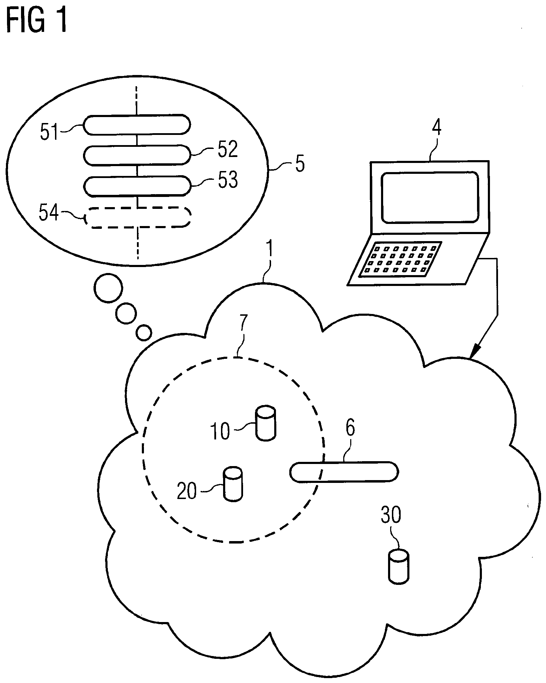

Fig. 1 shows an industrial network 1 according to a first embodiment. The industrial network 1 comprises a first network node 10, a second network node 20 and a third network node 30. The industrial network 1 is shown as a cloud in order to illustrate that the plurality of network nodes 10, 20 and 30 may be interconnected in any suitable topology.

The plurality of network nodes 10, 20, 30 of the industrial network 1 host a blockchain 5. The blockchain 5 comprises a plurality of confirmed transactions 51, 52, 53, .... The blockchain 5 stores the plurality of confirmed transactions 51, 52, 53, ... in a chain of blocks (not illustrated). Each block comprises at least one of the plurality of confirmed transactions 51, 52, 53, ... and is linked to its preceding block using a hash value of the preceding block as a reference value. Each of the plurality of network nodes 10, 20, 30 comprises a storage (not illustrated) and stores a local copy of the chain of blocks in the storage.

When a new transaction is to be added to the blockchain 5, one of the network nodes, for example network node 10, creates an unconfirmed transaction 6. The unconfirmed transaction 6 is then passed on or exchanged among the network nodes 10, 20, 30 in a peer-to-peer manner.

The network nodes 10, 20, 30 treat the unconfirmed transaction 6 according to a consensus protocol in order to reach a consensus to add the unconfirmed transaction 6 to the blockchain 5 in the following way:
For example, network node 20 may be configured as a mining network node. Network node 20 comprises a memory (not illustrated) and stores the unconfirmed transaction 6 in the memory together with further unconfirmed transactions that are exchanged among the network nodes 10, 20, 30. Network node 20 then performs operations in order to determine a nonce value that, when combined with the unconfirmed transactions stored in the memory and with a hash value of the currently last block in the blockchain 5, will yield a new block that fulfills a validity criterion mandated by the consensus protocol. For example, the consensus protocol mandates that the hash value of the new block be lower than a predetermined value. The determining of a proper nonce value is computationally difficult and takes time. If the network node 20 manages to create a new block that is valid under the consensus protocol before any other of the network node 10, 20, 30 manages to do so, network node 20 adds the new block to its local chain of blocks (copy of the blockchain 5) and exchanges the new block among the network nodes 10, 20, 30 in a peer-to-peer-manner. The other network nodes 20, 30, upon seeing the new block, verify the new block according to the consensus protocol and add the new block to their respective copies of the blockchain 5. In this way, the unconfirmed transaction 6 is added to the blockchain 5 as the confirmed transaction 54.

It is noted that the blockchain is not only distributed, but also permissionless, i.e., further network nodes may be joined to the industrial network 1 and begin to participate in hosting the blockchain 5 without having to supply any credentials. However, the consensus protocol makes it prohibitively difficult in terms of the required computational resources to manipulate the contents of the blockchain.

Fig. 1 further shows a connecting device 4. The connecting device 4 may be a laptop. The laptop 4 is seeking to access the industrial network 1. While the consensus protocol protects the blockchain 5 against manipulation by the laptop 4, it will be appreciated that there is a necessity to ensure that the laptop 4 actually has the right to access field automation functionality that is provided by the industrial network 1. The industrial network 1 therefore comprises a database defining access rights of the industrial network 1. According to the present embodiment, the blockchain 5 is used as the database defining the access rights in the industrial network 1.

The blockchain 5 comprises, among the confirmed transactions 51, 52, 53, 54, a confirmed connection transaction 52. The confirmed connection transaction 52 comprises data that is indicative of the connecting device 4 and further comprises data describing the right of the connecting device 4 to access the industrial network 1.

As described above, the blockchain 5 is configured to make it prohibitively difficult to manipulate the confirmed connection transaction 52.

The industrial network 1 comprises a trusted backbone 7. The trusted backbone 7 comprises the first network node 10, which is a first trusted network node, and the second network node 20, which is a second trusted network node, but does not comprise the third network node 30. The trusted backbone 7 may be located in a safe room, and access to the trusted backbone 7 may be restricted to trusted operators.

The confirmed connection transaction 52 is a transaction that has been authorized by the trusted backbone 7.

In this way, each network node 10, 20, 30 of the industrial network 1 is able to determine the right of the connecting device 4 to access the industrial network 1 by checking the blockchain 5, i.e. its respective local chain of blocks, for the existence of the confirmed connection transaction 52 that is authorized by the trusted backbone 7. Due to the specific characteristics of the blockchain 5 and the associated consensus protocol, this determination is highly reliable and resilient even if a malicious network node is connected to the industrial network 1 and also even in the absence of full network connectivity.

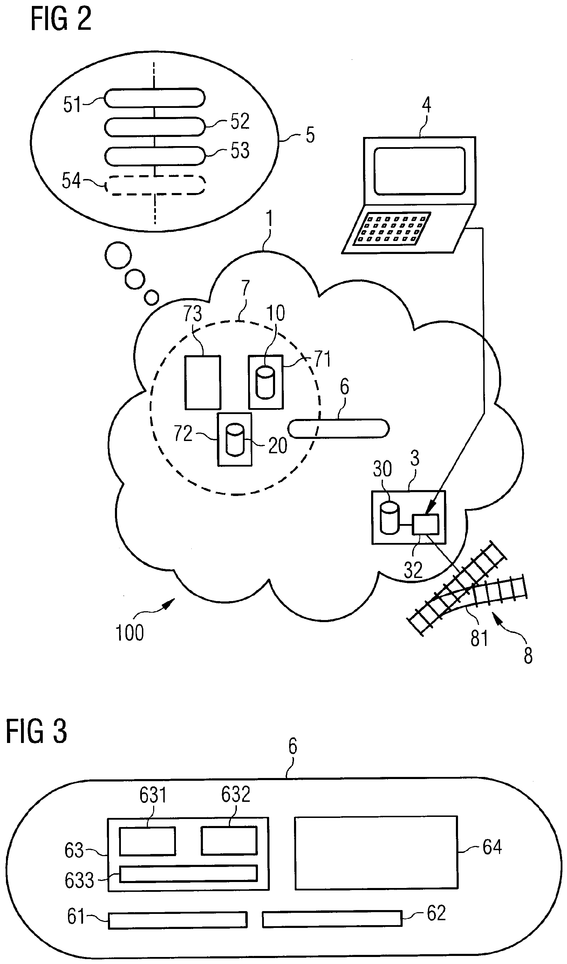

The unconfirmed transaction 6 shown in Fig. 2 may be an unconfirmed connection transaction 6. The consensus rule of the blockchain 5 of the industrial network 1 mandates that the plurality of network nodes 10, 20, 30 will add a new block comprising the unconfirmed connection transaction 6 to the blockchain 5, whereby the unconfirmed connection transaction 6 becomes a confirmed connection transaction of the plurality of confirmed transactions 51, 52, 53, 54, ..., only on the condition that the unconfirmed connection transaction 6 has been authorized by the trusted backbone 7.

Fig. 2 shows a schematic diagram of an industrial control system 100 including an industrial facility 8, a control unit 3 and an industrial network 1 according to a second embodiment.

The industrial facility 8 is a shunting yard comprising a plurality of railroad switches. One railroad switch of the railroad switches is illustrated at 81.

The control unit 3 is associated with the railroad switch 81 and embodies the network node 30. The network node 30 is a provider network node providing access to a network resource 32. The network resource 32 is a website, an API or a network port that allows, when accessed, to perform a control operation on the shunting yard using the control unit 3. In particular, the network resource 32 may be read so as to read a switch status or position of the railroad switch 81. The network resource 32 may be written to so as to change a switch position of the railroad switch 81.

If the laptop 4 requests access to the network resource 32, the provider network node 30 will check the blockchain 5 for the existence of a predetermined number of confirmed transaction connections 52 that are authorized by the trusted backbone 7, are indicative of the laptop 4 and are descriptive of the right of the laptop 4 to access the network resource 32. The predetermined number is one in the present embodiment. However, in a variant, the predetermined number may also be any number up to the number of trusted network nodes 10, 20 of the trusted backbone 7, i.e., the predetermined number could also be 2 in the present embodiment. The provider network node 30 will then only grant access to the network resource 32 for the connecting device 4 if the confirmed connection transaction 52 (the predetermined number of confirmed connection transactions) is/are present in the blockchain 5.

In Fig. 2, the trusted backbone 7 of the industrial network 1 comprises a first server computer 71, a second server computer 72 and a third server computer 73. The first server computer 71 embodies the first trusted network node 10. The second server computer 72 embodies the second trusted network node 20. The third server computer 73 embodies a trusted certificate authority (CA).

Fig. 3 shows a schematic diagram to illustrate the semantics of a connection transaction 6. In particular, Fig. 3 shows the semantics of the unconfirmed connection transaction 6 of Figs. 1, 2. However, the same semantics may also apply to the confirmed connection transaction 52 of Figs. 1, 2. In the following, reference will therefore be made collectively to the "connection transaction 6, 52".

The connection transaction 6, 52 is indicative of the connecting device 4 in the following way: The connection transaction 6, 52 comprises identification information 63. The identification information 63 comprises data that is adapted to be used to identify the connecting device 4. In the present embodiment, the identification information 63 is a digital certificate of the connecting device 4. The digital certificate 63 comprises a public key 631 of the connecting device 4, an identifier 632 of the connecting device 4 and a digital signature 633 created by the trusted certificate authority 7.

For example, the provider network node 30 determines whether the confirmed connection transaction 52 is indicative of the connecting device 4 by comparing an identifier transmitted, as part of identity information, by the connecting device 4 with the identifier 632 comprised by the identification information 63, by verifying a digital signature transmitted, as part of the identity information, by the connecting device 4 using the public key 631 of the connecting device 4 comprised by the digital certificate 63, and by verifying the digital signature 633 comprised by the digital certificate 63 using a public key (not shown) of the trusted certificate authority 73, which may be pre-stored in the provider network node 30 and/or in the blockchain 5. If all three verifications are affirmative, the confirmed connection transaction 52 is determined to be indicative of the connecting device 4.

The connection transaction 6, 52 is descriptive of the right of the connecting device 4 to access the industrial network 1 in the following way: The connection transaction 6, 62 comprises rights data 64, which comprise an access control list (ACL) describing the access rights of the connecting device 4.

The connection transaction 6, 52 is authorized by the trusted backbone 7 e.g. in the following way: When a new connection device is to be authorized, the trusted network node 10 creates, e.g. under operation by an authorized operator, the unconfirmed connection transaction 6. The first trusted network node 10 adds a first digital signature 61 of the first trusted network node 10 to the unconfirmed connection transaction 6 and exchanges the unconfirmed transaction connection 6 with other the other network nodes 20, 30 in a peer-to-peer manner. When the second trusted network node 20 sees the unconfirmed connection transaction 6 and sees the digital signature 61 of the first trusted network node 20, the second trusted network node 20 adds a second digital signature 62 of the second trusted network node 20 to the unconfirmed connection transaction 6.

When the unconfirmed connection transaction 6 is added to the blockchain 5 by a mining network node of the network nodes 10, 20, 30, the respective mining network node verifies the digital signature 61 of the first trusted network node 10 using a public key of the first trusted network node 10, and verifies the digital signature 62 of the second trusted network node 20 using a public key of the second trusted network node 20 in order to determine whether the unconfirmed connection transaction 6 is authorized by the trusted backbone 7.

The blockchain 5 comprises a confirmed trusted node identification transaction 51 that comprises the public key of the trusted network node 10. Similarly, the blockchain 5 further comprises a confirmed trusted node identification transaction (not shown) comprising the public key of the trusted network node 20. The confirmed trusted node identification transactions have a semantics similar to the connection transaction, i.e., the confirmed trusted node identification interaction is indicative of the trusted network node 10 by comprising a digital certificate of the trusted network node 10. The mining network node refers to the confirmed trusted node identification transactions stored in the blockchain 5 to determine the trusted backbone 7, i.e. to determine the digital certificates of the trusted network nodes 10, 20, which comprise the respective public keys of the trusted network nodes 10, 20.

The confirmed trusted node identification transaction 51 may be pre-stored in the blockchain 5 before the industrial network 1 is deployed in the field.

It is also noted that any of the network node 10, 20, 30 is able to verify the authorization by the trusted backbone 7 of the confirmed connection transaction 52 in the same way as the mining network node is able to verify the authorization by the trusted backbone 7 of the unconfirmed connection transaction 6.

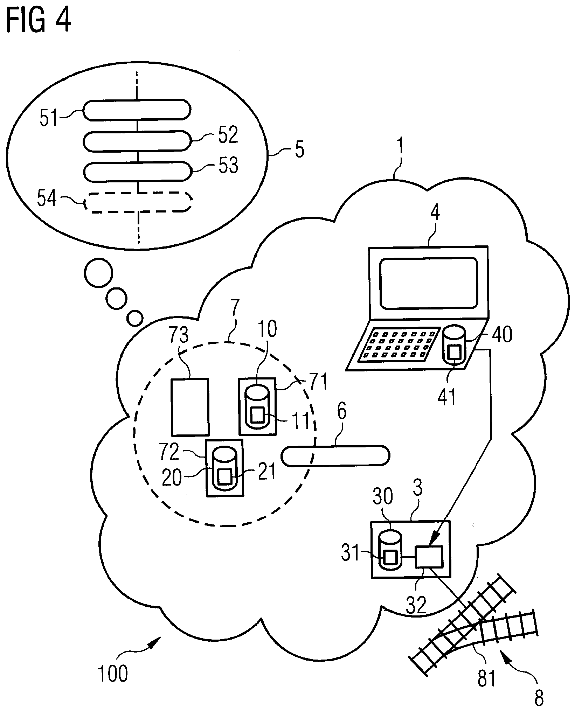

Fig. 4 shows a schematic diagram of an industrial control system including an industrial facility and an industrial network according to a third embodiment.

In Fig. 4, each of the network nodes 10, 20, 30 further comprises a respective first digital wallet 11, second digital wallet 22, and third digital wallet 31. The laptop 4 further comprises a fourth network node 40. In other words, the laptop 4 embodies therein a network node 40 that, upon joining the laptop 4 to the industrial network, becomes one of the network nodes 10, 20, 30, 40 forming the industrial network 1 and hosting the blockchain 5. The fourth network node 40 further comprises a fourth digital wallet 41.

The unconfirmed transaction 6 shown in Fig. 4 may, in addition to the unconfirmed connection transaction, also represent an unconfirmed cryptocurrency transaction. In other words, the network nodes 10, 20, 30, 40 of the third embodiment are configured to exchange among each other both unconfirmed connection transactions and unconfirmed cryptocurrency transactions. Likewise, the blockchain 5 of Fig. 4 stores the confirmed connection transaction 52, but also stores a confirmed cryptocurrency transaction 53.

A remittent network node of the network nodes 10, 20, 30, 40, can transmit an amount of cryptocurrency from its respective digital wallet 11, 21, 31, 41 to the digital wallet 11, 21, 31, 41 of a beneficiary network node of the network nodes 10, 20, 30, 40 by creating an unconfirmed cryptocurrency transaction 6 and exchanging the unconfirmed cryptocurrency transaction 6 among the network nodes 10, 20, 30, 40. The consensus protocol of the blockchain 5 determines that the unconfirmed cryptocurrency transaction 6 will be added to the blockchain 5 only on the condition that the digital wallet 11, 21, 31, 41 of the remitting network node of the network nodes 10, 20, 30, 40 contains the proper amount of cryptocurrency.

The trusted backbone 7 is pre-configured to have a large amount of cryptocurrency in the digital wallets 11, 21 of the trusted network nodes 10, 20.

After the trusted backbone 7 authorizes an unconfirmed connection transaction 6 by adding the digital signature 61 to the unconfirmed connection transaction 6 (Fig. 3), the trusted backbone 7, i.e. one of the trusted nodes 10, 20, transmits a first predetermined amount of cryptocurrency from its digital wallet 11, 21 to the digital wallet 41 of the network node 40 of the connecting device 4 indicated by the unconfirmed connection transaction 6. I.e., after having been authorized, the connecting device 4 (the laptop 4) is able to dispose of the first predetermined amount of cryptocurrency in its wallet 41.

When requesting access to the network resource 32 provided by the provider network node 30, the laptop 4 transfers a second predetermined amount, which is a fraction of the first predetermined amount, of cryptocurrency from its digital wallet 41 to the digital wallet 31 of the provider network node 30. The provider network node 30 of Fig. 4, in addition to checking whether the blockchain 5 comprises the confirmed connection transaction 5 indicative of the laptop 4, also checks whether the laptop 4 has transferred the second predetermined amount of cryptocurrency into the digital wallet 31 of the provider node 30, and grants access to the network resource 32 only if the second predetermined amount of cryptocurrency has been transferred by the laptop 4.

In this way, a quota is applied for accessing the network resource 32, i.e. the laptop 4 can only access the network resource 32 a certain number of times. Once the cryptocurrency stored in the digital wallet 41 of the fourth network node 40 of the laptop 4 is exhausted, the laptop 4 will not be able to continue to access the network resource 32. The user of the laptop 4 can then see an authorized maintenance operator and request the transfer of a further first predetermined amount of cryptocurrency.

In a variant of the third embodiment, the industrial network 1 enforces restrictions on the transfer of cryptocurrency designed to prevent abuse of the cryptocurrency. The consensus protocol of the blockchain 5 mandates that an unconfirmed cryptocurrency transaction 6 will only be added to the blockchain 5 if it is authorized by the trusted backbone 7. Authorization of a cryptocurrency transaction 6 happens in a similar way to the authorization of a connection transaction 6, i.e. by adding digital signatures 61, 62 of the trusted network nodes 10, 20. The trusted backbone 7 is configured to only authorize cryptocurrency transactions 6, 53 that involve either a network node 10, 20 of the trusted backbone 7 as a remitting or beneficiary network node, or involve the provider network node 30 as a beneficiary network node. In this way, a second connecting device (not shown) is prevented from sending cryptocurrency to the laptop 4 and vice versa.

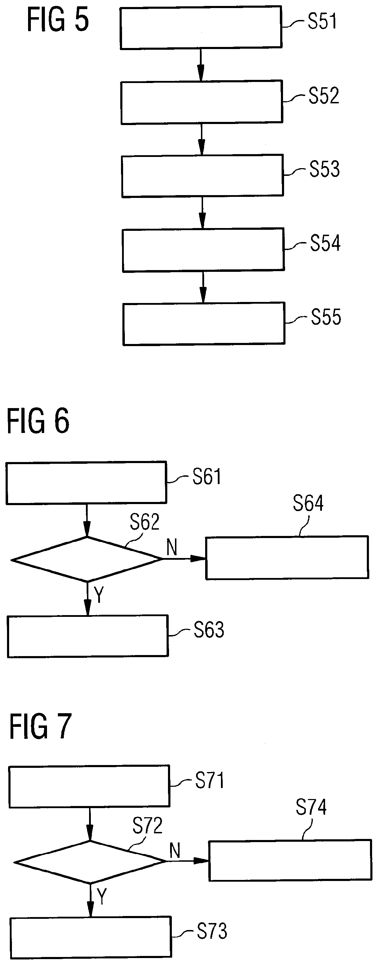

Fig. 5 illustrates an access control method for an industrial network according to an embodiment.

In step S51, the blockchain 5 is set up to be hosted on the plurality of network nodes 10, 20, 30.

In step S52, the trusted backbone 7 is formed from the trusted network nodes 10 and 20.

In step S53, the trusted backbone 7 creates the unconfirmed connection transaction 6, which is indicative of the connecting device 4 and descriptive of a right of the connecting device 5 to access the industrial network 1. The trusted backbone 7 then authorizes the unconfirmed connection transaction 6 created by the trusted backbone 7.

In step S54, the unconfirmed connection transaction 6 is exchanged among the plurality of network nodes 10, 20, 30.

In step S55, the unconfirmed connection transaction 6 is added to the blockchain 5 as a confirmed transaction 52 of the plurality of confirmed transactions 51, 52, 53, 54 only on the condition that a consensus determined by a consensus protocol of the blockchain 5 is reached between the plurality of network nodes 10, 20 30. In particular, the consensus protocol mandates that the unconfirmed connection transaction 6 be authorized by the trusted backbone 7.

Fig. 6 illustrates an access control method for an industrial network according to a further embodiment.

In step S61, the provider network node 30 provides the network resource 32.

In step S62, the provider network node 30 determines whether the blockchain 5 stores a confirmed connection transaction 52 that is authorized by the trusted backbone 7, indicative of the connecting device 4 and descriptive of the right of the connecting device 4 to access the network resource 32 provided by the provider network node 30.

If the determination is affirmative, the provider network node 30 grants the connecting device 4 access to the network resource 32 in step S63. Otherwise, access is denied in step S64.

Fig. 7 illustrates an access control method for an industrial network according to yet a further embodiment.

In step S71, the trusted network node 10 transfers a first predetermined amount of cryptocurrency from its digital wallet 11 to the digital wallet 41 of the network node 40 of the connecting device 4.

In step S72, the provider network node 30 determines if a second predetermined amount of cryptocurrency is transferred into the digital wallet 31 of the provider network node 30 from the digital wallet 41 of the network node 40 of the connecting device 4.

If the second predetermined amount of cryptocurrency has been transferred, the provider network node 30 grants the connecting device 4 access to the network resource 32 provided by the provider network node 30 at step S73. Otherwise, access is denied at step S74.

Although the present invention has been described in accordance with preferred embodiments, it is obvious for the person skilled in the art that modifications are possible in all embodiments.

### Reference Numerals:

- 1: industrial network
- 10: first network node
- 11: first digital wallet
- 20: second network node
- 21: second digital wallet
- 3: control unit
- 30: third network node
- 31: third digital wallet
- 32: network resource
- 4: connecting device
- 40: fourth network node
- 41: fourth digital wallet
- 5: blockchain
- 51: first confirmed transaction
- 52: second confirmed transaction
- 53: third confirmed transaction
- 54: fourth confirmed transaction
- 6: unconfirmed transaction
- 61: first signature
- 62: second signature
- 63: identification information
- 631: public key of connecting device
- 632: identifier of connecting device
- 633: signature of trusted certificate authority
- 64: rights information
- 7: trusted backbone
- 71: first server computer
- 72: second server computer
- 73: third server computer
- 8: industrial facility
- 81: railroad switch
- 100: industrial control system
- S51-S55: method steps
- S61-S64: method steps
- S71-S74: method steps

## Claims

1. Industrial network (1) comprising a plurality of network nodes (10, 20, 30) being interconnected and configured to:
- host a blockchain (5), wherein the blockchain (5) is a distributed permissionless trusted database configured to store a plurality of confirmed transactions (51, 52, 53, 54),
- exchange an unconfirmed transaction (6) among each other,
- add the unconfirmed transaction (6) to the blockchain (5) as a confirmed transaction (54) of the plurality of confirmed transactions (51, 52, 53, 54) only on the condition that a consensus determined by a consensus protocol of the blockchain (5) is reached between the plurality of network nodes (10, 20, 30),
wherein the plurality of network nodes (10, 20, 30) include a plurality of trusted network nodes (10, 20) forming a trusted backbone (7) of the industrial network (1), wherein trusted network nodes (10, 20) forming the trusted backbone (7) are located in one or more areas such as one or more safe room that can be secured with physical access controls, and/or are nodes only accessible to trusted operators of the industrial network,
wherein the confirmed transactions (51, 52, 53, 54) stored by the blockchain (5) comprise a confirmed connection transaction (52) that is authorized by the trusted backbone (7), is indicative of a connecting device (4) and is descriptive of a right of the connecting device (4) to access the industrial network (1).

2. The industrial network of claim 1, wherein
the unconfirmed transaction (6) is an unconfirmed connection transaction,
the trusted backbone (7) is configured to authorize the unconfirmed connection transaction (6), and
the plurality of network nodes (10, 20, 30) are further configured to reach the consensus to add the unconfirmed connection transaction (6) to the blockchain as the confirmed connection transaction (52) of the plurality of confirmed transactions (51, 52, 53, 54) only on the condition that the unconfirmed connection transaction (6) is authorized by the trusted backbone (7).

3. The industrial network of claim 1 or 2, wherein the plurality of network nodes (10, 20, 30) further comprise a provider network node (30) configured to:
- provide a network resource (32), and
- if the connecting device (4) requests access to the network resource (32) provided by the provider network node (30), grant the connecting device (4) access to the network resource (32) provided by the provider network node (30) only on the condition that the blockchain (5) stores a first predetermined number of confirmed connection transactions (52) that are authorized by the trusted backbone (7), indicative of the connecting device (4) and descriptive of the right of the connecting device (4) to access the network resource (32) provided by the provider network node (30),
wherein the first predetermined number is one or greater.

4. The industrial network of claim 3, wherein
a respective connection transaction (6, 52) is indicative of the connecting device (4) by comprising identification information (63) of the connecting device (4), and
at least the provider network node (30) of the plurality of network nodes (10, 20, 30) is configured to determine the identity of the connecting device (4) by verifying identity information transmitted by the connecting device based on the identification information (63) comprised by the respective connection transaction (6, 52).

5. The industrial network of claim 4 further comprising:
a trusted certificate authority (7), wherein
the identification information (63) of the connecting device (4) comprised by the connection transaction (6, 52) indicative of the connecting device (4) comprises a digital certificate (63) comprising a public key (631) of the connecting device (4) and being signed (633) by the trusted certificate authority (7), and
the identity information transmitted by the connecting device (4) may comprise a digital signature.

6. The industrial network of any of claims 1 to 5, wherein
the trusted backbone (7) is configured to authorize the unconfirmed transaction (6) by each of a second predetermined number of the trusted network nodes (10, 20) of the trusted backbone (7) adding a digital signature (61, 62) to the unconfirmed transaction (6), and
a confirmed transaction of the plurality of confirmed transactions (51, 52, 53, 54) is a confirmed transaction that is authorized by the trusted backbone (7) if it comprises the digital signatures (61, 62) of at least the second predetermined number of the trusted network nodes (10, 20) of the trusted backbone (7),
the second predetermined number being one or greater.

7. The industrial network of any of claims 1 to 6, wherein
the plurality of confirmed transactions (51, 52, 53, 54) stored by the blockchain (5) further comprise one or more confirmed trusted node identification transactions (51), wherein a trusted node identification transaction (51) is indicative of at least one trusted network node (10, 20) and descriptive of a right of the at least one trusted network node (10, 20) to belong to the trusted backbone (7),
the plurality of network nodes (10, 20, 30) are configured, when determining if a respective connection transaction (6, 52) is authorized by the trusted backbone (7), to determine the trusted backbone (7) by referring to the one or more confirmed trusted node identification transactions (51) stored in the blockchain (5).

8. The industrial network of any of claims 1 to 7, wherein
the connecting device (4) comprises a network node (40) that, when joined to the industrial network (1), is configured to become one of the network nodes (10, 20, 30, 40) forming the industrial network (1),
each network node (10, 20, 30, 40) of the plurality of network nodes further comprises a digital wallet (11, 21, 31, 41),
the plurality of network nodes (10, 20, 30, 40) are further configured to allow transfer of cryptocurrency among each other by exchanging among each other an unconfirmed cryptocurrency transaction (6) and adding the unconfirmed cryptocurrency transaction (6) to the blockchain as a confirmed cryptocurrency transaction (53) of the plurality of confirmed transactions (51, 52, 53, 54),
wherein the cryptocurrency transaction (6, 63) is a transaction specifying the transfer of an amount of cryptocurrency from the digital wallet (11, 21, 31, 41) of a remitting network node of the plurality of network nodes (10, 20, 30, 40) to the digital wallet (11, 21, 31, 41) of a beneficiary network node of the plurality of network nodes (10, 20, 30, 40).

9. The industrial network of claim 8, wherein
the trusted backbone (7) is configured to, upon authorizing the unconfirmed connection transaction (6), transfer a predetermined amount of cryptocurrency from the digital wallet (11, 21) of at least one of the trusted network nodes (10, 20) of the trusted backbone (7) to the digital wallet (41) of the network node (40) of the connecting device (4) indicated by the unconfirmed connection transaction (6),
the provider network node (30) is configured to grant the connecting device (4) access to the network resource (32) provided by the provider network node (30) only on the further condition that a second predetermined amount of cryptocurrency is transferred from the digital wallet (41) of the network node (40) of the connecting device (4) to the digital wallet (31) of the provider network node (30),
the second predetermined amount of cryptocurrency being lesser than or equal to the first predetermined amount of cryptocurrency.

10. The industrial network of any of claims 8 or 9, wherein
the trusted backbone (7) is further configured to authorize the unconfirmed cryptocurrency transaction only on the condition that the remitting network node or the beneficiary node is a trusted network node of the trusted network nodes (10, 20) of the trusted backbone (7), or that the beneficiary node is the provider network node (30), and
the plurality of network nodes are further configured to reach the consensus to add an unconfirmed cryptocurrency transaction (6) to the blockchain (5) as a confirmed cryptocurrency transaction (53) of the plurality of confirmed transactions (51, 52, 53, 54) only on the condition that the unconfirmed cryptocurrency transaction (6) is authorized by the trusted backbone (7).

11. Industrial control system (100) comprising an industrial network (1) of any of claims 1 to 10, an industrial facility (8) and a plurality of control units (3), each of the control units (3) comprising a network node (30) of the plurality of network nodes (10, 20, 30),
wherein a network node of a respective control unit (3) is a provider network node (30) configured to provide a network resource (32) allowing, when accessed, to perform a control operation on the industrial facility (8).

12. The industrial control system of claim 11, wherein
the industrial facility (8) is a shunting yard comprising a plurality of railroad switches (81),
each railroad switch (81) is associated with one of the control units (3),
the control operation comprises an operation to change a position of the railroad switch (81) and/or an operation to read a status of the railroad switch (81).

13. Access control method for an industrial network (1) comprising a plurality of network nodes (10, 20, 30) being interconnected, the access control method comprising the steps of:
hosting (S51) a blockchain (5) on the plurality of network nodes (10, 20, 30), wherein the blockchain (5) is a distributed permissionless trusted database configured to store a plurality of confirmed transactions (51, 52, 53, 54),
forming (S53) a trusted backbone (7) of the industrial network (1) from a number of network nodes (10, 20) included by the plurality of network nodes (10, 20, 30), wherein the nodes (10, 20) forming the trusted backbone (7) are located in one or more areas such as one or more safe room that can be secured with physical access controls, and/or are nodes only accessible to trusted operators of the industrial network,
authorizing (S54) an unconfirmed connection transaction (6) by the trusted backbone (7),
exchanging (S55) the unconfirmed connection transaction (6) among the plurality of network nodes (10, 20, 30),
adding (S55) the unconfirmed connection transaction (6) to the blockchain (5) as a confirmed connection transaction (52) of the plurality of confirmed transactions (51, 52, 53, 54) only on the condition that a consensus determined by a consensus protocol of the blockchain (5) is reached between the plurality of network nodes (10, 20, 30),
and
wherein the confirmed connection transaction (52) is indicative of a connecting device (4) and descriptive of a right of the connecting device (4) to access the industrial network (1).

14. The access control method for an industrial network of claim 13, further comprising the steps of:
providing a network resource (32) by a provider network node (30) comprised by the plurality of network nodes (10, 20, 30) and,
if the connecting device (4) requests access to the network resource (32) provided by the provider network node (30), granting the connecting device (4) access to the network resource (32) provided by the provider network node (30) only on the condition that the blockchain (5) stores a first predetermined number of confirmed connection transactions (52) that are authorized by the trusted backbone (7), indicative of the connecting device (4) and descriptive of the right of the connecting device (4) to access the network resource (32) provided by the provider network node (30),
wherein the first predetermined number is one or greater.

15. The access control method for an industrial network of claim 14, further comprising the steps of:
transferring a first predetermined amount of cryptocurrency from a digital wallet (11, 21) of at least one of the trusted network nodes (10, 20) of the trusted backbone (7) to a digital wallet (41) of a network node (40) of the connecting device (4) indicated by the unconfirmed connection transaction (6),
granting the connecting device (4) access to the network resource (32) provided by the provider network node (30) only on the further condition that a second predetermined amount of cryptocurrency is transferred from the digital wallet (41) of the network node (40) of the connecting device (4) to the digital wallet (31) of the provider network node (30), and
the second predetermined amount of cryptocurrency being lesser than or equal to the first predetermined amount of cryptocurrency.

## Patentansprüche

1. Industrienetzwerk (1), umfassend eine Vielzahl von Netzwerkknoten (10, 20, 30), die verschaltet sind und ausgelegt sind zum:
- Hosten einer Blockchain (5), wobei die Blockchain (5) eine verteilte erlaubnisfreie vertrauenswürdige Datenbank ist, die ausgelegt ist zum Speichern einer Vielzahl von bestätigten Transaktionen (51, 52, 53, 54),
- Austauschen einer unbestätigten Transaktion (6) untereinander,
- Hinzufügen der unbestätigten Transaktion (6) zu der Blockchain (5) als eine bestätigte Transaktion (54) aus der Vielzahl von bestätigten Transaktionen (51, 52, 53, 54) nur unter der Bedingung, dass ein durch ein Konsensprotokoll der Blockchain (5) bestimmter Konsens zwischen der Vielzahl von Netzwerkknoten (10, 20, 30) erreicht wird,
wobei die Vielzahl von Netzwerkknoten (10, 20, 30) eine Vielzahl von vertrauenswürdigen Netzwerkknoten (10, 20) beinhaltet, die einen vertrauenswürdigen Backbone (7) des Industrienetzwerks (1) ausbilden, wobei sich vertrauenswürdige Netzwerkknoten (10, 20), die den vertrauenswürdigen Backbone (7) ausbilden, in einem oder mehreren Gebieten, wie etwa einem oder mehreren Schutzräumen, die durch physische Zugangskontrolle gesichert werden können, befinden und/oder Knoten sind, die nur für vertrauenswürdige Bediener des Industrienetzwerks zugänglich sind,
wobei die durch die Blockchain (5) gespeicherten bestätigten Transaktionen (51, 52, 53, 54) eine bestätigte Verbindungstransaktion (52) umfassen, die durch den vertrauenswürdigen Backbone (7) autorisiert ist, eine Verbindungsvorrichtung (4) angibt und ein Recht der Verbindungsvorrichtung (4) zum Zugang zu dem Industrienetzwerks (1) beschreibt.

2. Industrienetzwerk nach Anspruch 1, wobei
die unbestätigte Transaktion (6) eine unbestätigte Verbindungstransaktion ist,
der vertrauenswürdige Backbone (7) ausgelegt ist zum Autorisieren der unbestätigten Verbindungstransaktion (6), und die Vielzahl von Netzwerkknoten (10, 20, 30) ferner ausgelegt ist zum Erreichen des Konsens, die unbestätigte Verbindungstransaktion (6) als die bestätigte Verbindungstransaktion (52) der Vielzahl von bestätigten Transaktionen (51, 52, 53, 54) nur unter der Bedingung zu der Blockchain hinzuzufügen, dass die unbestätigte Verbindungstransaktion (6) durch den vertrauenswürdigen Backbone (7) autorisiert wird.

3. Industrienetzwerk nach Anspruch 1 oder 2, wobei die Vielzahl von Netzwerkknoten (10, 20, 30) ferner einen Anbieternetzwerkknoten (30) umfasst, der ausgelegt ist zum:
- Bereitstellen einer Netzwerkressource (32), und
- falls die Verbindungsvorrichtung (4) Zugang zu der durch den Anbieternetzwerkknoten (30) bereitgestellten Netzwerkressource (32) anfordert, Genehmigen für die Verbindungsvorrichtung (4) von Zugang zu der durch den Anbieternetzwerkknoten (30) bereitgestellten Netzwerkressource (32) nur unter der Bedingung, dass die Blockchain (5) eine erste vorbestimmte Anzahl von bestätigten Verbindungstransaktionen (52) speichert, die durch den vertrauenswürdigen Backbone (7) autorisiert wurden, die Verbindungsvorrichtung (4) angeben und das Recht der Verbindungsvorrichtung (4) zum Zugang zur durch den Anbieternetzwerkknoten (30) bereitgestellten Netzwerkressource (32) beschreiben,
wobei die erste vorbestimmte Anzahl eins oder größer ist.

4. Industrienetzwerk nach Anspruch 3, wobei
eine jeweilige Verbindungstransaktion (6, 52) die Verbindungsvorrichtung (4) angibt, indem Identifikationsinformationen (63) der Verbindungsvorrichtung (4) enthalten sind, und
zumindest der Anbieternetzwerkknoten (30) der Vielzahl von Netzwerkknoten (10, 20, 30) ausgelegt ist zum Bestimmen der Identität der Verbindungsvorrichtung (4), indem die durch die Verbindungsvorrichtung übertragenen Identitätsinformationen auf der Grundlage der in der jeweiligen Verbindungstransaktion (6, 52) enthaltenen Identifikationsinformationen (63) verifiziert werden.

5. Industrienetzwerk nach Anspruch 4, ferner umfassend:
eine vertrauenswürdige Zertifikatsinstanz (7), wobei die in der Verbindungstransaktion (6, 52) enthaltenen Identifikationsinformationen (63) der Verbindungsvorrichtung (4), die die Verbindungsvorrichtung (4) angeben, ein digitales Zertifikat (63) umfassen, das einen öffentlichen Schlüssel (631) der Verbindungsvorrichtung (4) umfasst und durch die vertrauenswürdige Zertifikatsinstanz (7) signiert ist, und
die durch die Verbindungsvorrichtung (4) übertragenen Identitätsinformationen eine digitale Signatur umfassen können.

6. Industrienetzwerk nach einem der Ansprüche 1 bis 5, wobei der vertrauenswürdige Backbone (7) ausgelegt ist zum Autorisieren der unbestätigten Transaktion (6) durch jeden einer zweiten vorbestimmten Anzahl der vertrauenswürdigen Netzwerkknoten (10, 20) des vertrauenswürdigen Backbones (7), eine digitale Signatur (61, 62) zu der unbestätigten Transaktion (6) hinzuzufügen, und
eine bestätigte Transaktion aus der Vielzahl von bestätigten Transaktionen (51, 52, 53, 54) eine bestätigte Transaktion ist, die durch den vertrauenswürdigen Backbone (7) autorisiert wurde, falls sie die digitalen Signaturen (61, 62) von mindestens der zweiten vorbestimmten Anzahl der vertrauenswürdigen Netzwerkknoten (10, 20) des vertrauenswürdigen Backbones (7) umfasst,
wobei die zweite vorbestimmte Anzahl eins oder größer ist.

7. Industrienetzwerk nach einem der Ansprüche 1 bis 6, wobei die durch die Blockchain (5) gespeicherte Vielzahl von bestätigten Transaktionen (51, 52, 53, 54) ferner eine oder mehrere bestätigte Vertrauenswürdiger-Knoten-Identifikationstransaktionen (51) umfasst, wobei eine Vertrauenswürdiger-Knoten-Identifikationstransaktion (51) mindestens einen vertrauenswürdigen Netzwerkknoten (10, 20) angibt und ein Recht des mindestens einen vertrauenswürdigen Netzwerkknotens (10, 20), dem vertrauenswürdigen Backbone (7) anzugehören, beschreibt,
die Vielzahl von Netzwerkknoten (10, 20, 30), wenn bestimmt wird, ob eine jeweilige Verbindungstransaktion (6, 52) durch den vertrauenswürdigen Backbone (7) autorisiert wurde, ausgelegt ist zum Bestimmen des vertrauenswürdigen Backbones (7) durch Bezugnahme auf den einen oder die in der Blockchain (5) gespeicherten mehreren bestätigten Vertrauenswürdiger-Knoten-Identifikationstransaktionen (51).

8. Industrienetzwerk nach einem der Ansprüche 1 bis 7, wobei die Verbindungsvorrichtung (4) einen Netzwerknoten (40) umfasst, der bei Anschaltung an das Industrienetzwerk (1) dafür ausgelegt ist, einer der Netzwerkknoten (10, 20, 30, 40) zu werden, die das Industrienetzwerk (1) ausbilden,
jeder der Netzwerkknoten (10, 20, 30, 40) der Vielzahl von Netzwerkknoten ferner eine digitale Geldbörse (11, 21, 31, 41) umfasst,
die Vielzahl von Netzwerkknoten (10, 20, 30, 40) ferner dafür ausgelegt ist, Transfer von Kryptowährung untereinander durch Austauschen einer unbestätigten Kryptowährungstransaktion (6) untereinander und Hinzufügen der unbestätigten Kryptowährungstransaktion (6) zu der Blockchain als eine bestätigte Kryptowährungstransaktion (53) der Vielzahl von bestätigten Transaktionen (51, 52, 53, 54) zuzulassen,
wobei die Kryptowährungstransaktion (6, 63) eine Transaktion ist, die den Transfer eines Betrags von Kryptowährung aus der digitalen Geldbörse (11, 21, 31, 41) eines überweisenden Netzwerkknotens der Vielzahl von Netzwerkknoten (10, 20, 30, 40) an die digitale Geldbörse (11, 21, 31, 41) eines begünstigten Netzwerkknotens der Vielzahl von Netzwerkknoten (10, 20, 30, 40) spezifiziert.

9. Industrienetzwerk nach Anspruch 8, wobei
der vertrauenswürdige Backbone (7) ausgelegt ist, bei Autorisierung der unbestätigten Verbindungstransaktion (6), zum Transfer eines vorbestimmten Betrags von Kryptowährung aus der digitalen Geldbörse (11, 21) von mindestens einem der vertrauenswürdigen Netzwerkknoten (10, 20) des vertrauenswürdigen Backbones (7) an die digitale Geldbörse (41) des Netzwerkknotens (40) der Verbindungsvorrichtung (4), die durch die unbestätigte Verbindungstransaktion (6) angegeben wird,
der Anbieternetzwerkknoten (30) dafür ausgelegt ist, der Verbindungsvorrichtung (4) Zugang zu der durch den Anbieternetzwerkknoten (30) bereitgestellten Netzwerkressource (32) nur unter der weiteren Bedingung zu genehmigen, dass ein zweiter vorbestimmter Betrag von Kryptowährung aus der digitalen Geldbörse (41) des Netzwerkknotens (40) der Verbindungsvorrichtung (4) zu der digitalen Geldbörse (31) des Anbieternetzwerkknotens (30) transferiert wird,
der zweite vorbestimmte Betrag von Kryptowährung kleiner oder gleich dem ersten vorbestimmten Betrag von Kryptowährung ist.

10. Industrienetzwerk nach einem der Ansprüche 8 oder 9, wobei der vertrauenswürdige Backbone (7) ferner ausgelegt ist zum Autorisieren der unbestätigten Kryptowährungstransaktion nur unter der Bedingung, dass der überweisende Netzwerkknoten oder der begünstigte Knoten ein vertrauenswürdiger Netzwerknoten der vertrauenswürdigen Netzwerkknoten (10, 20) des vertrauenswürdigen Backbones (7) ist oder dass der begünstigte Knoten der Anbieternetzwerkknoten (30) ist, und
die Vielzahl von Netzwerkknoten ferner dafür ausgelegt ist, den Konsens zu erreichen, eine unbestätigte Kryptowährungstransaktion (6) zu der Blockchain (5) als eine bestätigte Kryptowährungstransaktion (53) der Vielzahl von bestätigten Transaktionen (51, 52, 53, 54) nur unter der Bedingung hinzuzufügen, dass die unbestätigte Kryptowährungstransaktion (6) durch den vertrauenswürdigen Backbone (7) autorisiert wurde.

11. Industriesteuerungssystem (100), das ein Industrienetzwerk (1) nach einem der Ansprüche 1 bis 10, eine Industrieeinrichtung (8) und eine Vielzahl von Steuereinheiten (3) umfasst, wobei jede der Steuereinheiten (3) einen Netzwerkknoten (30) der Vielzahl von Netzwerkknoten (10, 20, 30) umfasst,
wobei ein Netzwerkknoten einer jeweiligen Steuereinheit (3) ein Anbieternetzwerkknoten (30) ist, der ausgelegt ist zum Bereitstellen einer Netzwerkressource (32), die, bei Zugang, zulässt, eine Steuerungsoperation an der Industrieeinrichtung (8) durchzuführen.

12. Industriesteuerungssystem nach Anspruch 11, wobei die Industrieeinrichtung (8) ein Rangierbahnhof ist, der eine Vielzahl von Eisenbahnweichen (81) umfasst,
jede Eisenbahnweiche (81) mit einer der Steuereinheiten (3) verknüpft ist,
die Steuerungsoperation eine Operation zum Wechseln einer Stellung der Eisenbahnweiche (81) und/oder eine Operation zum Auslesen eines Status der Eisenbahnweiche (81) ist.

13. Zugangssteuerungsverfahren für ein Industrienetzwerk (1), umfassend eine Vielzahl von Netzwerkknoten (10, 20, 30), die verschaltet sind, wobei das Zugangssteuerungsverfahren die folgenden Schritte umfasst:
Hosten (S51) einer Blockchain (5) auf der Vielzahl von Netzwerkknoten (10, 20, 30), wobei die Blockchain (5) eine verteilte erlaubnisfreie vertrauenswürdige Datenbank ist, die ausgelegt ist zum Speichern einer Vielzahl von bestätigten Transaktionen (51, 52, 53, 54),
Ausbilden (S53) eines vertrauenswürdigen Backbones (7) des Industrienetzwerks (1) aus einer Anzahl von Netzwerkknoten (10, 20), die in der Vielzahl von Netzwerkknoten (10, 20, 30) enthalten sind, wobei sich die Knoten (10, 20), die den vertrauenswürdigen Backbone (7) ausbilden, in einem oder mehreren Gebieten, wie etwa einem oder mehreren Schutzräumen, die durch physische Zugangskontrolle gesichert werden können, befinden und/oder Knoten sind, die nur für vertrauenswürdige Bediener des Industrienetzwerks zugänglich sind,
Autorisieren (S54) einer unbestätigten Verbindungstransaktion (6) durch den vertrauenswürdigen Backbone (7),
Austauschen (S55) der unbestätigten Verbindungstransaktion (6) unter der Vielzahl von Netzwerkknoten (10, 20, 30), Hinzufügen (S55) der unbestätigten Verbindungstransaktion (6) zu der Blockchain (5) als eine bestätigte Verbindungstransaktion (52) aus der Vielzahl von bestätigten Transaktionen (51, 52, 53, 54) nur unter der Bedingung, dass ein durch ein Konsensprotokoll der Blockchain (5) bestimmter Konsens zwischen der Vielzahl von Netzwerkknoten (10, 20, 30) erreicht wird,
und
wobei die bestätigte Verbindungstransaktion (52) eine Verbindungsvorrichtung (4) angibt und ein Recht der Verbindungsvorrichtung (4) zum Zugang zu dem Industrienetzwerk (1) beschreibt.

14. Zugangssteuerungsverfahren für ein Industrienetzwerk nach Anspruch 13, ferner die folgenden Schritte umfassend:
Bereitstellen einer Netzwerkressource (32) durch einen Anbieternetzwerkknoten (30), der in der Vielzahl von Netzwerkknoten (10, 20, 30) enthalten ist, und,
falls die Verbindungsvorrichtung (4) Zugang zu der durch den Anbieternetzwerkknoten (30) bereitgestellten Netzwerkressource (32) anfordert, Genehmigen für die Verbindungsvorrichtung (4) von Zugang zu der durch den Anbieternetzwerkknoten (30) bereitgestellten Netzwerkressource (32) nur unter der Bedingung, dass die Blockchain (5) eine erste vorbestimmte Anzahl von bestätigten Verbindungstransaktionen (52) speichert, die durch den vertrauenswürdigen Backbone (7) autorisiert wurden, die Verbindungsvorrichtung (4) angeben und das Recht der Verbindungsvorrichtung (4) zum Zugang zur durch den Anbieternetzwerkknoten (30) bereitgestellten Netzwerkressource (32) beschreiben,
wobei die erste vorbestimmte Anzahl eins oder größer ist.

15. Zugangssteuerungsverfahren für ein Industrienetzwerk nach Anspruch 14, das ferner die folgenden Schritte umfasst:
Transferieren eines ersten vorbestimmten Betrags von Kryptowährung aus einer digitalen Geldbörse (11, 21) von mindestens einem der vertrauenswürdigen Netzwerkknoten (10, 20) des vertrauenswürdigen Backbones (7) an die digitale Geldbörse (41) eines Netzwerkknotens (40) der Verbindungsvorrichtung (4), die durch die unbestätigte Verbindungstransaktion (6) angegeben wird,
Genehmigen für die Verbindungsvorrichtung (4) von Zugang zu der durch den Anbieternetzwerkknoten (30) bereitgestellten Netzwerkressource (32) nur unter der weiteren Bedingung, dass ein zweiter vorbestimmter Betrag von Kryptowährung aus der digitalen Geldbörse (41) des Netzwerkknotens (40) der Verbindungsvorrichtung (4) zu der digitalen Geldbörse (31) des Anbieternetzwerkknotens (30) transferiert wird, und dass der zweite vorbestimmte Betrag von Kryptowährung kleiner oder gleich dem ersten vorbestimmten Betrag von Kryptowährung ist.

## Revendications

1. Réseau industriel (1) comprenant une pluralité de nœuds de réseau (10, 20, 30) qui sont interconnectés et configurés pour :
- héberger une chaîne de blocs (5), la chaîne de blocs (5) étant une base de données de confiance sans permissions répartie configurée pour stocker une pluralité de transactions confirmées (51, 52, 53, 54),
- échanger une transaction non confirmée (6) entre eux,
- ajouter la transaction non confirmée (6) à la chaîne de blocs (5) comme une transaction confirmée (54) de la pluralité de transactions confirmées (51, 52, 53, 54) uniquement à la condition qu'un consensus déterminé par un protocole de consensus de la chaîne de blocs (5) soit trouvé entre la pluralité de nœuds de réseau (10, 20, 30),
la pluralité de nœuds de réseau (10, 20, 30) comportant une pluralité de nœuds de réseau de confiance (10, 20) formant une dorsale de confiance (7) du réseau industriel (1), les nœuds de réseau de confiance (10, 20) formant la dorsale de confiance (7) étant situés dans une ou plusieurs zones telles qu'une ou plusieurs salles sûres susceptibles d'être sécurisées au moyen de contrôles d'accès physiques, et/ou étant des nœuds uniquement accessibles par des opérateurs de confiance du réseau industriel,
les transactions confirmées (51, 52, 53, 54) stockées par la chaîne de blocs (5) comprenant une transaction de connexion confirmée (52) qui est autorisée par la dorsale de confiance (7), indique un dispositif qui se connecte (4) et décrit un droit du dispositif qui se connecte (4) à accéder au réseau industriel (1).

2. Réseau industriel selon la revendication 1, dans lequel
la transaction non confirmée (6) est une transaction de connexion non confirmée,
la dorsale de confiance (7) est configurée pour autoriser la transaction de connexion non confirmée (6), et
la pluralité de nœuds de réseau (10, 20, 30) sont configurés en outre pour trouver le consensus pour ajouter la transaction de connexion non confirmée (6) à la chaîne de blocs comme la transaction de connexion confirmée (52) de la pluralité de transactions confirmées (51, 52, 53, 54) uniquement à la condition que la transaction de connexion non confirmée (6) soit autorisée par la dorsale de confiance (7).

3. Réseau industriel selon la revendication 1 ou 2, dans lequel la pluralité de nœuds de réseau (10, 20, 30) comprennent en outre un nœud de réseau fournisseur (30) configuré pour :
- fournir une ressource de réseau (32), et
- si le dispositif qui se connecte (4) sollicite l'accès à la ressource de réseau (32) fournie par le nœud de réseau fournisseur (30), octroyer au dispositif qui se connecte (4) l'accès à la ressource de réseau (32) fournie par le nœud de réseau fournisseur (30) uniquement à la condition que la chaîne de blocs (5) stocke un premier nombre prédéterminé de transactions de connexion confirmées (52) qui sont autorisées par la dorsale de confiance (7), indiquant le dispositif qui se connecte (4) et décrivant le droit du dispositif qui se connecte (4) à accéder à la ressource de réseau (32) fournie par le dispositif de réseau fournisseur (30),
le premier nombre prédéterminé étant supérieur ou égal à un.

4. Réseau industriel selon la revendication 3, dans lequel
une transaction de connexion respective (6, 52) indique le dispositif qui se connecte (4) par le fait qu'elle comprend des informations d'identification (63) du dispositif qui se connecte (4), et
au moins le nœud de réseau fournisseur (30) de la pluralité de nœuds de réseau (10, 20, 30) est configuré pour déterminer l'identité du dispositif qui se connecte (4) en vérifiant des informations d'identité transmises par le dispositif qui se connecte sur la base des informations d'identification (63) comprises dans la transaction de connexion respective (6, 52).

5. Réseau industriel selon la revendication 4, comprenant en outre :
une autorité de certification de confiance (7),
les informations d'identification (63) du dispositif qui se connecte (4) comprises dans la transaction de connexion (6, 52) indiquant le dispositif qui se connecte (4) comprenant un certificat numérique (63) comprenant une clé publique (631) du dispositif qui se connecte (4) et signé (633) par l'autorité de certification de confiance (7), et
les informations d'identité transmises par le dispositif qui se connecte (4) comprenant éventuellement une signature numérique.

6. Réseau industriel selon l'une quelconque des revendications 1 à 5, dans lequel
la dorsale de confiance (7) est configurée pour autoriser la transaction non confirmée (6) par le fait que chacun d'un deuxième nombre prédéterminé des nœuds de réseau de confiance (10, 20) de la dorsale de confiance (7) ajoute une signature numérique (61, 62) à la transaction non confirmée (6), et
une transaction confirmée de la pluralité de transactions confirmées (51, 52, 53, 54) est une transaction confirmée qui est autorisée par la dorsale de confiance (7) si elle comprend les signatures numériques (61, 62) d'au moins le deuxième nombre prédéterminé des nœuds de réseau de confiance (10, 20) de la dorsale de confiance (7),
le deuxième nombre prédéterminé étant supérieur ou égal à un.

7. Réseau industriel selon l'une quelconque des revendications 1 à 6, dans lequel
la pluralité de transactions confirmées (51, 52, 53, 54) stockées par la chaîne de blocs (5) comprend en outre une ou plusieurs transactions d'identification de nœud de confiance confirmées (51), une transaction d'identification de nœud de confiance (51) indiquant au moins un nœud de réseau de confiance (10, 20) et décrivant un droit de l'au moins un nœud de réseau de confiance (10, 20) à appartenir à la dorsale de confiance (7),
la pluralité de nœuds de réseau (10, 20, 30) sont configurés, lors de la détermination si une transaction de connexion respective (6, 52) est autorisée par la dorsale de confiance (7), pour déterminer la dorsale de confiance (7) par référence aux une ou plusieurs transactions d'identification de nœud de confiance confirmées (51) stockées dans la chaîne de blocs (5).

8. Réseau industriel selon l'une quelconque des revendications 1 à 7, dans lequel
le dispositif qui se connecte (4) comprend un nœud de réseau (40) qui, lorsqu'il adhère au réseau industriel (1), est configuré pour devenir l'un des nœuds de réseau (10, 20, 30, 40) formant le réseau industriel (1),
chaque nœud de réseau (10, 20, 30, 40) de la pluralité de nœuds de réseau comprend en outre un portefeuille numérique (11, 21, 31, 41),
la pluralité de nœuds de réseau (10, 20, 30, 40) sont configurés en outre pour permettre le transfert de cryptomonnaie entre eux en échangeant entre eux une transaction de cryptomonnaie non confirmée (6) et en ajoutant la transaction de cryptomonnaie non confirmée (6) à la chaîne de blocs comme une transaction de cryptomonnaie confirmée (53) de la pluralité de transactions confirmées (51, 52, 53, 54),
la transaction de cryptomonnaie (6, 63) étant une transaction stipulant le transfert d'un montant de cryptomonnaie depuis le portefeuille numérique (11, 21, 31, 41) d'un nœud de réseau donneur d'ordre de la pluralité de nœuds de réseau (10, 20, 30, 40) jusqu'au portefeuille numérique (11, 21, 31, 41) d'un nœud de réseau bénéficiaire de la pluralité de nœuds de réseau (10, 20, 30, 40).

9. Réseau industriel selon la revendication 8, dans lequel
la dorsale de confiance (7) est configurée pour, dès l'autorisation de la transaction de connexion non confirmée (6), transférer un montant prédéterminé de cryptomonnaie depuis le portefeuille numérique (11, 21) d'au moins un des nœuds de réseau de confiance (10, 20) de la dorsale de confiance (7) jusqu'au portefeuille numérique (41) du nœud de réseau (40) du dispositif qui se connecte (4) indiqué par la transaction de connexion non confirmée (6),
le nœud de réseau fournisseur (30) est configuré pour octroyer au dispositif qui se connecte (4) l'accès à la ressource de réseau (32) fournie par le nœud de réseau fournisseur (30) uniquement à la condition supplémentaire qu'un deuxième montant prédéterminé de cryptomonnaie soit transféré depuis le portefeuille numérique (41) du nœud de réseau (40) du dispositif qui se connecte (4) jusqu'au portefeuille numérique (31) du nœud de réseau fournisseur (30),
le deuxième montant prédéterminé de cryptomonnaie étant inférieur ou égal au premier montant prédéterminé de cryptomonnaie.

10. Réseau industriel selon l'une quelconque des revendications 8 ou 9, dans lequel
la dorsale de confiance (7) est configurée en outre pour autoriser la transaction de cryptomonnaie non confirmée uniquement à la condition que le nœud de réseau donneur d'ordre ou le nœud bénéficiaire soit un nœud de réseau de confiance des nœuds de réseau de confiance (10, 20) de la dorsale de confiance (7), ou que le nœud bénéficiaire soit le nœud de réseau fournisseur (30), et
la pluralité de nœuds de réseau sont configurés en outre pour trouver le consensus pour ajouter une transaction de cryptomonnaie non confirmée (6) à la chaîne de blocs (5) comme une transaction de cryptomonnaie confirmée (53) de la pluralité de transactions confirmées (51, 52, 53, 54) uniquement à la condition que la transaction de cryptomonnaie non confirmée (6) soit autorisée par la dorsale de confiance (7).

11. Système de commande industriel (100) comprenant un réseau industriel (1) selon l'une quelconque des revendications 1 à 10, une installation industrielle (8) et une pluralité d'unités de commande (3), chacune des unités de commande (3) comprenant un nœud de réseau (30) de la pluralité de nœuds de réseau (10, 20, 30),
un nœud de réseau d'une unité de commande respective (3) étant un nœud de réseau fournisseur (30) configuré pour fournir une ressource de réseau (32) permettant, une fois accédée, de réaliser une opération de commande sur l'installation industrielle (8).

12. Système de commande industriel selon la revendication 11, dans lequel
l'installation industrielle (8) est une gare de triage comprenant une pluralité d'aiguillages (81),
chaque aiguillage (81) est associé à l'une des unités de commande (3),
l'opération de commande comprenant une opération pour modifier une position de l'aiguillage (81) et/ou une opération pour lire un état de l'aiguillage (81).

13. Procédé de contrôle d'accès pour un réseau industriel (1) comprenant une pluralité de nœuds de réseau (10, 20, 30) qui sont interconnectés, le procédé de contrôle d'accès comprenant les étapes suivantes :
hébergement (S51) d'une chaîne de blocs (5) sur la pluralité de nœuds de réseau (10, 20, 30), la chaîne de blocs (5) étant une base de données de confiance sans permissions répartie configurée pour stocker une pluralité de transactions confirmées (51, 52, 53, 54),
formation (S53) d'une dorsale de confiance (7) du réseau industriel (1) à partir d'un certain nombre de nœuds de réseau (10, 20) inclus dans la pluralité de nœuds de réseau (10, 20, 30), les nœuds (10, 20) formant la dorsale de confiance (7) étant situés dans une ou plusieurs zones telles qu'une ou plusieurs salles sûres susceptibles d'être sécurisées au moyen de contrôles d'accès physiques, et/ou étant des nœuds uniquement accessibles par des opérateurs de confiance du réseau industriel,
autorisation (S54) d'une transaction de connexion non confirmée (6) par la dorsale de confiance (7),
échange (S55) de la transaction de connexion non confirmée (6) entre la pluralité de nœuds de réseau (10, 20, 30),
ajout (S55) de la transaction de connexion non confirmée (6) à la chaîne de blocs (5) comme une transaction de connexion confirmée (52) de la pluralité de transactions confirmées (51, 52, 53, 54) uniquement à la condition qu'un consensus déterminé par un protocole de consensus de la chaîne de blocs (5) soit trouvé entre la pluralité de nœuds de réseau (10, 20, 30),
et
la transaction de connexion confirmée (52) indiquant un dispositif qui se connecte (4) et décrivant un droit du dispositif qui se connecte (4) à accéder au réseau industriel (1).

14. Procédé de contrôle d'accès pour un réseau industriel selon la revendication 13, comprenant en outre les étapes suivantes :
fourniture d'une ressource de réseau (32) par un nœud de réseau fournisseur (32) compris dans la pluralité de nœuds de réseau (10, 20, 30), et
si le dispositif qui se connecte (4) sollicite l'accès à la ressource de réseau (32) fournie par le nœud de réseau fournisseur (30), octroi au dispositif qui se connecte (4) de l'accès à la ressource de réseau (32) fournie par le nœud de réseau fournisseur (30) uniquement à la condition que la chaîne de blocs (5) stocke un premier nombre prédéterminé de transactions de connexion confirmées (52) qui sont autorisées par la dorsale de confiance (7), indiquant le dispositif qui se connecte (4) et décrivant le droit du dispositif qui se connecte (4) à accéder à la ressource de réseau (32) fournie par le dispositif de réseau fournisseur (30),
le premier nombre prédéterminé étant supérieur ou égal à un.

15. Procédé de contrôle d'accès pour un réseau industriel selon la revendication 14, comprenant en outre les étapes suivantes :
transfert d'un premier montant prédéterminé de cryptomonnaie depuis un portefeuille numérique (11, 21) d'au moins un des nœuds de réseau de confiance (10, 20) de la dorsale de confiance (7) jusqu'à un portefeuille numérique (41) d'un nœud de réseau (40) du dispositif qui se connecte (4) indiqué par la transaction de connexion non confirmée (6),
octroi au dispositif qui se connecte (4) de l'accès à la ressource de réseau (32) fournie par le nœud de réseau fournisseur (30) uniquement à la condition supplémentaire qu'un deuxième montant prédéterminé de cryptomonnaie soit transféré depuis le portefeuille numérique (41) du nœud de réseau (40) du dispositif qui se connecte (4) jusqu'au portefeuille numérique (31) du nœud de réseau fournisseur (30), et
le deuxième montant prédéterminé de cryptomonnaie étant inférieur ou égal au premier montant prédéterminé de cryptomonnaie.
